# EUROPÄISCHE PATENTSCHRIFT

(11) **EP 3 669 100 B1**
(45) Veröffentlichungstag und Bekanntmachung des Hinweises auf die Patenterteilung: **17.03.2021**
(21) Anmeldenummer: 18742406.4
(22) Anmeldetag: 25.06.2018
(51) Int. Cl.: F16H 3/12, F16H 3/78, F16H 37/08, F16H 37/04

(54) **GRUPPENGETRIEBEVORRICHTUNG**
RANGE-CHANGE TRANSMISSION DEVICE
DISPOSITIF DE TRAIN D'ENGRENAGES

(30) Priorität: 16.08.2017 DE 102017007762
(43) Veröffentlichungstag der Anmeldung: 24.06.2020
(73) Patentinhaber: Daimler AG, 70372 Stuttgart (DE)
(72) Erfinder: STEFFENS, Frank, 73760 Ostfildern (DE); SCHNITZER, Detlef, 73770 Denkendorf (DE); PFANNKUCHEN, Ingo, 88046 Friedrichshafen (DE); LUCKMANN, Jens, 71364 Winnenden (DE)
(74) Vertreter: JENSEN & SON
(86) Internationale Anmeldenummer: PCT/EP2018/066874
(87) Internationale Veröffentlichungsnummer: WO 2019/034309

(56) Entgegenhaltungen:
- DE-A1- 2 715 874
- DE-A1- 2 718 652
- DE-A1- 10 322 234
- DE-A1-102009 025 094

## Beschreibung

Die Erfindung betrifft eine Gruppengetriebevorrichtung, insbesondere ein lastschaltbares Powersplitgetriebe, besonders bevorzugt ein Lastschaltklauengetriebe.

Aus der DE 10 2009 025 094 A1 und der DE 103 22 234 A1 sind Getriebevorrichtungen mit zwei Getriebezweigen, die jeweils abwechselnd betrieben werden, bekannt.

Aus der WO 2015/063050 A1 ist bereits eine Gruppengetriebevorrichtung mit einer Eingangswelle, mit einer Abtriebswelle, mit einer Vorgelegewelle, mit zumindest einem Planetenradsatz und mit einer Momentenanpassungsvorrichtung, wobei ein erstes Getriebeelement des Planetenradsatzes permanent drehfest mit der Abtriebswelle gekoppelt ist, bekannt, wobei ein zweites Getriebeelement des Planetenradsatzes direkt mit der Vorgelegewelle gekoppelt oder koppelbar ist, wobei ein drittes Getriebeelement des Planetenradsatzes permanent drehfest mit der Eingangswelle gekoppelt ist und wobei die Vorgelegewelle mit der Momentenanpassungsvorrichtung gekoppelt oder koppelbar ist.

Außerdem sind aus der DE 10 2009 025 094 A1, der DE 27 18 652 A1 und der gattungsgemäßen DE 27 15 874 A1 Gruppengetriebevorrichtungen bekannt, bei denen darüber hinaus eine Schalteinheit vorgesehen ist, mittels derer die Vorgelegewelle mit der Abtriebswelle zumindest in bestimmten Betriebszuständen gekoppelt werden kann.

Der Erfindung liegt insbesondere die Aufgabe zugrunde, eine Gruppengetriebevorrichtung mit verbesserten Eigenschaften hinsichtlich einer Effizienz, insbesondere einer Energieeffizienz, bereitzustellen. Sie wird durch eine erfindungsgemäße Ausgestaltung entsprechend dem Anspruch 1 gelöst. Weiterbildungen der Erfindung ergeben sich aus den abhängigen Ansprüchen.

Die Erfindung geht aus von einer Gruppengetriebevorrichtung mit einer Eingangswelle, mit einer Abtriebswelle, mit einer' Vorgelegewelle und zumindest einem Planetenradsatz , wobei ein erstes Getriebeelement des Planetenradsatzes koaxial zu der Abtriebswelle angeordnet ist und derart mit der Abtriebswelle gekoppelt oder koppelbar ist, dass das erste Getriebeelement und die Abtriebswelle mit der gleichen Winkelgeschwindigkeit drehen, wobei ein zweites Getriebeelement des Planetenradsatzes mit der Vorgelegewelle gekoppelt oder koppelbar ist, wobei ein drittes Getriebeelement des Planetenradsatzes koaxial zu der Eingangswelle angeordnet und derart permanent mit der Eingangswelle verbunden ist, dass das dritte Getriebeelement und die Eingangswelle immer mit der gleichen Winkelgeschwindigkeit drehen, und wobei eine erste Schalteinheit dazu vorgesehen ist, die Vorgelegewelle mit der Abtriebswelle zu koppeln.

Es wird vorgeschlagen, dass die Gruppengetriebevorrichtung eine Momentenanpassungsvorrichtung (14) aufweist und dass das zweite Getriebeelement des Planetenradsatzes mit der Momentenanpassungsvorrichtung gekoppelt oder koppelbar ist, und dass eine zweite Schalteinheit vorgesehen ist, welche an eines der Getriebeelemente des Planetenradsatzes angebunden ist und welche dazu vorgesehen ist, die Eingangswelle mit der Vorgelegewelle zu koppeln. Vorzugsweise ist die Gruppengetriebevorrichtung zumindest konstruktiv zur Schaltung von zumindest vier Vorwärtsgetriebegängen vorgesehen. Durch die erfindungsgemäße Ausgestaltung der Gruppengetriebevorrichtung kann insbesondere eine vorteilhaft hohe Effizienz, insbesondere Energieeffizienz, bereitgestellt werden. Vorzugsweise kann mittels der Erfindung insbesondere zugkraftunterbrechungsfrei durch Bremseinwirkung, insbesondere der Momentenanpassungsvorrichtung, insbesondere einer E-Maschine geschaltet werden. Es kann daher insbesondere "rekuperativ" geschaltet werden, insbesondere da eine Bremseinwirkung per E-Maschine eine Energiegewinnung bedeutet. Es kann insbesondere eine Rekuperation der Schaltenergie erreicht werden. Ferner ist keine Synchronisierung durch eine Brennkraftmaschine erforderlich. Es kann eine Verkürzung der Schaltzeiten erreicht werden. Des Weiteren wird keine Doppelkupplung benötigt und es ist eine freie Gangwahl innerhalb der Schaltgruppe möglich. Zudem sind keine Lamellenkupplungen und Bremsen notwendig. Es kann ein verschleißfreies Anfahren und extrem langsames Manövrieren ermöglicht werden. Ferner kann dadurch insbesondere ein lastunterbrechungsfreier Gangwechsel ermöglicht werden.

Es kann insbesondere vermieden werden, dass, wie bei der Verwendung von Doppelkupplungsgetrieben, die Schaltenergie in der Doppelkupplung in Wärme umgewandelt wird. Durch die Gruppengetriebevorrichtung, insbesondere bei einer Ausführung als Powersplitkonzept in Klauenbauweise, ist es insbesondere möglich, die Schaltenergie in Verbindung mit der Momentenanpassungsvorrichtung, insbesondere in Form einer E-Maschine und/oder eines Energiespeichersystem, beispielsweise über eine Hydraulik zwischenzuspeichern und nach der Schaltung dem Antrieb zurückzuspeisen. Es kann also insbesondere der Gangwechsel ohne Kraftflusssunterbrechung, insbeosndere lediglich durch Drehmomentreduzierung, ermöglicht werden. Dies ist beispielsweise durch eine E-Maschine, einen Retarder oder eine Hydraulikpumpe möglich.

Unter einer "Gruppengetriebevorrichtung" soll insbesondere zumindest ein Teil eines Gruppengetriebes verstanden werden. Alternativ kann die Gruppengetriebevorrichtung das Gruppengetriebe vollständig ausbilden. Die Gruppengetriebevorrichtung weist vorteilhaft eine Hauptgruppe auf, welche eine Hauptwelle umfasst. Die Abtriebswelle der Gruppengetriebevorrichtung ist vorteilhaft permanent drehfest mit der Hauptwelle der Hauptgruppe verbunden. Die Abtriebswelle der Gruppengetriebevorrichtung ist generll dazu vorgesehen, ein Antriebsmoment in Richtung eines Antriebsrades eines Kraftfahrzeuges abzugeben.

Die Eingangswelle ist zur mittelbaren oder unmittelbaren Anbindung der Gruppengetriebevorrichtung an eine Antriebsmaschine, vorzugsweise an einen Verbrennungsmotor, vorgesehen.

Mit dem Begriff "gekoppelt" ist gemeint, dass ein Element der Gruppengetriebevorrichtung, wie zum Beispiel eine Welle oder ein Zahnrad, mit einem anderen Element drehmomentübertragend mittelbar oder unmittelbar verbunden ist. Eine derartige "Kopplung" kann drehfest sein, so dass das eine Element und das andere Element koaxial zueinander angeordnet und derart fest miteinander verbunden sind, dass das eine Element und das andere Element immer mit der gleichen Winkelgeschwindigkeit drehen.

Eine Kopplung kann aber auch, allgemeiner gefasst, durch einen Verzahnungseingriff oder mehrere Verzahnungseingriffe bzw. durch eine Übersetzungsstufe dargestellt sein. Der Begriff "gekoppelt" beschreibt somit allgemein eine Anordnung, über welche ein Drehmoment übertragen werden kann.

Der Begriff "permanent drehfest gekoppelt" ist eingeschränkt auf eine permanent drehfeste Anordnung zwischen zwei Elementen.

Die Hauptgruppe kann insbesondere eine Mehrzahl von Gängen umfassen. Die weitere Anordnung von Reduziergetrieben, insbesondere einer Rangegruppe, und/oder einer Vorschaltgruppe ist möglich. Vorzugsweise ist die Gruppengetriebevorrichtung, insbesondere für LKWs, insbesondere bei einer Ausbildung als Powersplit-Gruppengetriebevorrichtung zu einer Aufteilung eines Antriebsmoments auf eine Hauptwelle und auf eine Vorgelegewelle vorgesehen, wobei die Vorgelegewelle insbesondere an einem Ende wieder mit der Hauptwelle gekoppelt ist. Bevorzugt weist einer der Pfade schaltbare Zahnräder auf, wobei der Pfad mit den schaltbaren Zahnrädern insbesondere Mittel zur Verringerung oder Erhöhung des Drehmoments dieses Weges aufweist. Vorzugsweise kann über die Mittel zumindest ein schaltbares Zahnrad und/oder dessen Pfad frei von Drehmoment gemacht werden, während der andere Weg immer noch Drehmoment überträgt. Hierdurch kann insbesondere eine Gangschaltung ohne Drehmomentunterbrechung ermöglicht werden. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Planetenradsatz" soll in diesem Zusammenhang insbesondere eine Einheit eines Planetengetriebes mit einem als Sonnenrad ausgebildeten Getriebeelement, mit einem als Hohlrad ausgebildeten Getriebeelement, mit einem als Planetenradträger ausgebildeten Getriebeelement und mit mehreren als Planetenräder ausgebildeten Getriebeelementen verstanden werden, wobei die als Planetenräder ausgebildeten Getriebeelemente von dem als Planetenradträger ausgebildeten Getriebeelement auf einer Kreisbahn um das als Sonnenrad ausgebildete Getriebeelement angeordnet sind. Unter einem "Planetengetriebe" soll insbesondere eine Einheit mit zumindest einem Planetenradsatz, bevorzugt mit genau einem Planetenradsatz, verstanden werden. Alternativ oder zusätzlich kann das Planetengetriebe mehrstufig ausgebildet sein und vorzugsweise mehrere Planetenradsätze umfassen.

Ferner soll unter einer "Momentenanpassungsvorrichtung" insbesondere eine Vorrichtung verstanden werden, welche in zumindest einem Betriebszustand zu einer Veränderung eines übertragenen Moments vorgesehen ist. Vorzugsweise kann die Momentenanpassungsvorrichtung zu einer Verringerung und/oder zu einer Erhöhung eines übertragenen Moments vorgesehen sein. Bevorzugt ist die Momentenanpassungsvorrichtung insbesondere in einem Anfahrvorgang und/oder bei einem Schaltvorgang zu einer Veränderung, insbesondere zu einer stufenlosen Veränderung, eines Übersetzungsverhältnisses der Gruppengetriebevorrichtung vorgesehen. Vorzugsweise ist die Momentenanpassungsvorrichtung in zumindest einem Betriebszustand dazu vorgesehen, um zumindest ein schaltbares Zahnrad frei von einem Drehmoment zu bekommen, ein übertragenes Moment zu verringern und/oder zu erhöhen. Besonders bevorzugt ist die Momentenanpassungsvorrichtung von einem Bremselement, insbesondere von einer E-Maschine, einer Hydraulikpumpe, einem Retarder oder einer Reibbremse, gebildet. Bei einer Ausbildung als E-Maschine kann die E-Maschine zu einer Bremseinwirkung insbesondere als Generator betrieben werden.

Unter einer "Schalteinheit" soll in diesem Zusammenhang insbesondere eine Einheit mit zumindest zwei Kopplungselementen und zumindest einem Schaltelement verstanden werden, welches dazu vorgesehen ist, eine schaltbare Verbindung zwischen den zumindest zwei Kopplungselementen herzustellen.

Vorzugsweise ist die Schalteinheit als Doppelschalteinheit gebildet, nämlich indem die Schalteinheit mit drei Kopplungselementen ausgebildet ist. Unter einem "Schaltelement" einer Schalteinheit soll insbesondere ein Element verstanden werden, das vorzugsweise axial verschiebbar ausgebildet ist und in zumindest einem Betiebszustand, insbesondere in zumindest einer Schaltstellung der Schalteinheit, zu einer drehfesten Kopplung der zumindest zwei Kopplungselemente vorgesehen ist. Unter einem "Kopplungselement" soll insbesondere ein permanent drehfest mit einem Getriebeelement, wie beispielsweise einer Getriebewelle, einem Losrad, einem Festrad und/oder einer Achse, verbundenes Element der Schalteinheit verstanden werden, welches vorzugsweise axial und radial fixiert ist und welches insbesondere für eine reib-, kraft- und/oder formschlüssige Verbindung mit dem Schaltelement vorgesehen ist, wie beispielsweise ein Losrad, das eine Verzahnung zur Verbindung mit dem Schaltelement aufweist. Unter einer "Schalteinheit mit drei Kopplungselementen" soll insbesondere eine Schalteinheit verstanden werden, bei der das Schaltelement dazu vorgesehen ist, ein Kopplungselement, insbesondere ein inneres Kopplungselement, schaltbar mit jeweils zumindest einem der beiden anderen Kopplungselemente zu verbinden oder von diesen zu entkoppeln.

Ferner wird vorgeschlagen, dass das zweite Getriebeelement des Planetenradsatzes permanent drehfest mit einem Losrad gekoppelt ist, welches mit einem Festrad der Vorgelegewelle permanent in Eingriff steht. Vorzugsweise ist das Losrad von einem Losrad der Eingangswelle gebildet ist. Bevorzugt kann das Losrad beispielsweise über eine auf der Eingangswelle gelagerte Hohlwelle permanent drehfest mit dem zweiten Getriebeelement verbunden sein. Dadurch kann insbesondere eine vorteilhafte Anbindung der Vorgelegewelle erreicht werden. Es kann insbesondere eine direkte Kopplung der Vorgelegewelle mit dem Planetenradsatz erreicht werden.

Vorzugsweise ist die zweite Schalteinheit von einer Schalteinheit mit drei Kopplungselementen gebildet und somit als Doppelschalteinheit ausgebildet.

Vorzugsweise ist die zweite Schalteinheit in der ersten Schaltstellung dazu vorgesehen, zwei Getriebeelemente des Planetenradsatzes, insbesondere das zweite Getriebeelement und das dritte Getriebeelement, drehfest zu verbinden. Bevorzugt ist die zweite Schalteinheit in der ersten Schaltstellung dazu vorgesehen, ein Sonnenrad und einen Planetenradträger des Planetenradsatzes drehfest zu verbinden. Besonders bevorzugt sind zwei Kopplungselemente der Schalteinheit jeweils drehfest mit zumindest einem Getriebeelement des Planetenradsatzes verbunden. Dadurch kann insbesondere vorteilhaft eine Verblockung des Planetenradsatzes erreicht werden. Hierdurch kann insbesondere eine einfache und effiziente Schaltung der Gruppengetriebevorrichtung erreicht werden.

Es wird ferner vorgeschlagen, dass die erste Schalteinheit in axialer Richtung hinter dem Planetenradsatz angeordnet ist. Vorzugsweise ist die erste Schalteinheit in axialer Richtung, in Momentenstromrichtung betrachtet, hinter dem Planetenradsatz angeordnet. Bevorzugt ist die erste Schalteinheit auf einer der Brennkraftmaschine abgewandten Seite des Planetenradsatzes angeordnet. Besonders bevorzugt ist die erste Schalteinheit ausgehend von dem Planetenradsatz getriebeausgangsseitig angeordnet. Dadurch kann insbesondere eine vorteilhafte Gruppengetriebevorrichtung bereitgestellt werden. Es kann eine vorteilhafte Anordnung erreicht werden. Grundsätzlich wäre jedoch auch denkbar, dass der Planetenradsatz abtriebsseitig angeordnet ist und die Vorgelegewelle und die Abtriebswelle über den Planetenradsatz zusammengeführt werden.

Es wird weiter vorgeschlagen, dass die zweite Schalteinheit in axialer Richtung vor dem Planetenradsatz angeordnet ist. Vorzugsweise ist die zweite Schalteinheit in axialer Richtung, in Momentenstromrichtung betrachtet, vor dem Planetenradsatz angeordnet. Bevorzugt ist die zweite Schalteinheit auf einer der Brennkraftmaschine zugewandten Seite des Planetenradsatzes angeordnet. Besonders bevorzugt ist die zweite Schalteinheit ausgehend von dem Planetenradsatz getriebeeingangsseitig angeordnet.

Dadurch kann insbesondere eine vorteilhafte Gruppengetriebevorrichtung bereitgestellt werden. Es kann eine vorteilhafte Anordnung erreicht werden.

Ferner wird vorgeschlagen, dass die erste Schalteinheit eine erste Schaltstellung, eine zweite Schaltstellung und eine neutrale Schaltstellung aufweist. Vorzugsweise ist die erste Schalteinheit in einer neutralen Schaltstellung funktionslos, also insbesondere nicht zu einer Übertragung eines Antriebsmoments vorgesehen. Dadurch kann insbesondere eine vorteilhafte Gruppengetriebevorrichtung bereitgestellt werden. Es kann eine vorteilhaft hohe Effizienz erreicht werden.

Des Weiteren wird vorgeschlagen, dass die erste Schalteinheit in der ersten Schaltstellung dazu vorgesehen ist, ein erstes Losrad der Abtriebswelle drehfest mit der Abtriebswelle zu koppeln. Vorzugsweise wird dazu das erste Losrad der Abtriebswelle über die erste Schalteinheit, insbesondere über das Schaltelement der ersten Schalteinheit, drehfest mit einem Festrad, insbesondere einem ersten Festrad, der Abtriebswelle gekoppelt. Bevorzugt ist das erste Losrad der Abtriebswelle permanent in Eingriff mit einem Festrad, insbesondere einem ersten Festrad, der Vorgelegewelle. Dadurch kann insbesondere eine vorteilhafte Schaltbarkeit der Gruppengetriebevorrichtung erreicht werden.

Es wird ferner vorgeschlagen, dass die erste Schalteinheit in der zweiten Schaltstellung dazu vorgesehen ist, ein zweites Losrad der Abtriebswelle drehfest mit der Abriebswelle zu koppeln. Vorzugsweise wird dazu das zweite Losrad der Abtriebswelle über die erste Schalteinheit, insbesondere über das Schaltelement der ersten Schalteinheit, drehfest mit einem Festrad, insbesondere einem zweiten Festrad, der Abtriebswelle gekoppelt. Bevorzugt ist das zweite Losrad der Abtriebswelle permanent in Eingriff mit einem Festrad, insbesondere einem zweiten Festrad, der Vorgelegewelle. Dadurch kann insbesondere eine vorteilhafte Schaltbarkeit der Gruppengetriebevorrichtung erreicht werden.

Es wird weiter vorgeschlagen, dass die Gruppengetriebevorrichtung eine Bremsvorrichtung aufweist, welche dazu vorgesehen ist, das zweite Getriebeelement des Planetenradsatzes gehäusefest anzubinden. Ferner wird vorgeschlagen, dass die zweite Schalteinheit in einer ersten Schaltstellung zu einer Kopplung mit der Bremsvorrichtung vorgesehen ist. Insbesondere ist die zweite Schalteinheit in einer ersten Schaltstellung zu einer Kopplung des zweiten Getriebeelements mit der Bremsvorrichtung vorgesehen.

Vorzugsweise ist die zweite Schalteinheit in einer ersten Schaltstellung dazu vorgesehen, mittels dem Schaltelement die gehäusefeste Bremsvorrichtung drehfest mit dem Losrad der Eingangswelle, welche permanent drehfest mit dem zweiten Getriebeelement gekoppelt ist, zu verbinden. Die Bremsvorrichtung kann beispielsweise von einer gehäusefesten Verzahnung gebildet sein. Grundsätzlich sind jedoch auch andere, einem Fachmann als sinnvoll erscheinende Ausbildungen der Bremsvorrichtung denkbar. Dadurch kann insbesondere eine vorteilhafte Schaltbarkeit der Gruppengetriebevorrichtung erreicht werden.

Ferner wird vorgeschlagen, dass die zweite Schalteinheit in einer zweiten Schaltstellung dazu vorgesehen ist, die Eingangswelle mit der Vorgelegewelle zu koppeln. Die zweite Schalteinheit kann hierzu als Doppelschalteinheit ausgebildet sein. Die zweite Schalteinheit kann aber auch aus mehreren Teilen bestehen, so dass die Teile unabhängig voneinander je zwei Kopplungselemente koppeln können.

Zur Kopplung der Eingangswelle mit der Vorgelegewelle mittels der zweiten Schalteinheit wird vorzugsweise das dritte Getriebeelement mit dem zweiten Getriebeelement verblockt, sodass das zweite Getriebeelement drehfest mit der Eingangswelle gekoppelt ist. Dadurch kann eine besonders kostengünstige Schalteinheit der Gruppengetriebevorrichtung dargestellt werden.

Des Weiteren wird vorgeschlagen, dass das erste Getriebeelement des Planetenradsatzes von einem Hohlrad des Planetenradsatzes gebildet ist. Es wird ferner vorgeschlagen, dass das zweite Getriebeelement des Planetenradsatzes von einem Sonnenrad des Planetenradsatzes gebildet ist. Es wird weiter vorgeschlagen, dass das dritte Getriebeelement des Planetenradsatzes von einem Planetenradträger des Planetenradsatzes gebildet ist. Grundsätzlich wäre auch eine andere, einem Fachmann als sinnvoll erscheinende Ausbildung der Getriebeelemente denkbar. Dadurch kann insbesondere eine vorteilhafte Ausbildung der Gruppengetriebevorrichtung erreicht werden.

Ferner geht die Erfindung insbesondere auch von einem Verfahren zum Betrieb einer Gruppengetriebevorrichtung nach einem der vorhergehenden Ansprüche aus.

Die Begriffe "axial" und "radial" sind im Folgenden insbesondere auf eine Hauptrotationsachse des Mehrstufengetriebes bezogen, sodass der Ausdruck "axial" insbesondere eine Richtung bezeichnet, die parallel oder koaxial zu der Hauptrotationsachse verläuft. Ferner bezeichnet der Ausdruck "radial" insbesondere eine Richtung, die senkrecht zu der Hauptrotationsachse verläuft. Unter einer "getriebeeingangsseitigen Anordnung" soll insbesondere verstanden werden, dass das genannte Bauteil auf einer Seite der Eingangswelle angeordnet ist, welche der Brennkraftmaschine zugewandt ist. Unter einer "getriebeausgangsseitigen Anordnung" soll insbesondere verstanden werden, dass das genannte Bauteil auf einer Seite der Abtriebswelle angeordnet ist, welche der Brennkraftmaschine abgewandt ist.

Weitere Vorteile ergeben sich aus der folgenden Figurenbeschreibung. In den Figuren ist ein Ausführungsbeispiel der Erfindung dargestellt. Die Figuren, die Figurenbeschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Dabei zeigen:
- Fig. 1: ein Kraftfahrzeug mit einer Brennkraftmaschine und mit einer Gruppengetriebevorrichtung in einer schematischen Darstellung,
- Fig. 2: die erfindungsgemäße Gruppengetriebevorrichtung des Kraftfahrzeugs in einer schematischen Darstellung in einer Neutralstellung,
- Fig. 3: die erfindungsgemäße Gruppengetriebevorrichtung des Kraftfahrzeugs in einer schematischen Darstellung in einem ersten Gang,
- Fig. 4: die erfindungsgemäße Gruppengetriebevorrichtung des Kraftfahrzeugs in einer schematischen Darstellung in einem zweiten Gang und
- Fig. 5: ein Schaltschema der erfindungsgemäßen Gruppengetriebevorrichtung.

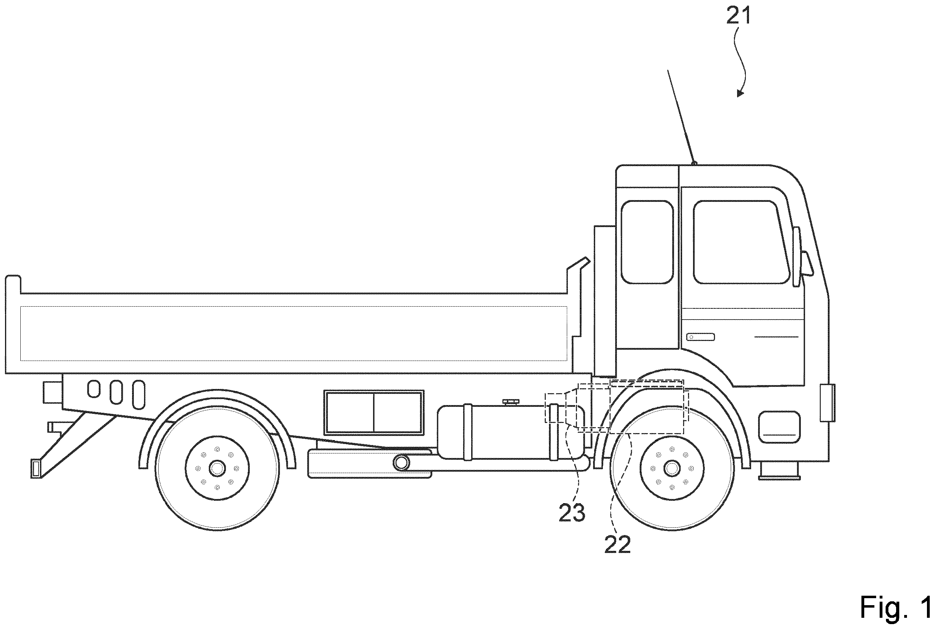

Die Figur 1 zeigt schematisch ein Kraftfahrzeug 21. Das Kraftfahrzeug 21 ist von einem Nutzfahrzeug gebildet. Das Kraftfahrzeug 21 ist beispielhaft von einem LKW gebildet. Grundsätzlich wäre jedoch auch eine andere, einem Fachmann als sinnvoll erscheinende Ausgestaltung des Kraftfahrzeugs 21 denkbar. Das Kraftfahrzeug 21 umfasst einen Antriebsstrang, über welchen nicht weiter sichtbar Antriebsräder des Kraftfahrzeugs 21 angetrieben werden. Der Antriebsstrang umfasst eine Antriebseinheit 22. Die Antriebseinheit 22 ist von einer Brennkraftmaschine gebildet. Die Antriebseinheit 22 ist von einem Verbrennungsmotor gebildet. Ferner weist das Kraftfahrzeug 21 ein Mehrstufengetriebe 23 auf. Die Antriebseinheit 22 weist eine angetriebene Kurbelwelle auf, welche mit dem Mehrstufengetriebe 23 verbunden ist. Das Mehrstufengetriebe 23 ist von einem Kraftfahrzeuggetriebe gebildet. Das Mehrstufengetriebe 23 bildet einen Teil des Antriebsstrangs des Kraftfahrzeugs 21. Das Mehrstufengetriebe 23 ist entlang des Antriebsstrangs, insbesondere entlang eines Kraftflusses des Antriebsstrangs, hinter der Antriebseinheit 22 angeordnet. Das Mehrstufengetriebe 23 weist eine Gruppengetriebevorrichtung 10 auf. Das Mehrstufengetriebe 23 ist von einer Gruppengetriebevorrichtung 10 gebildet. Die Gruppengetriebevorrichtung 10 ist von einem Splitgetriebe gebildet. Die Gruppengetriebevorrichtung 10 ist von einem Powersplitgetriebe gebildet. Die Gruppengetriebevorrichtung 10 ist konstruktiv zur Schaltung von vier Getriebegängen G1, G2, G3, G4 vorgesehen. Grundsätzlich wäre auch die weitere Anordnung von Reduziergetrieben, wie beispielsweise einer Rangegruppe und/oder einer Vorschaltgruppe, möglich.

Die Gruppengetriebevorrichtung 10 umfasst eine Eingangswelle 11. Die Eingangswelle 11 ist zu einer Anbindung an eine Kupplung K1 vorgesehen. Die Eingangswelle 11 ist antriebsseitig zu einer Anbindung an eine Kupplung K1 vorgesehen. Ferner umfasst die Gruppengetriebevorrichtung 10 eine Abtriebswelle 12. Die Abtriebswelle 12 ist zu der Eingangswelle 11 koaxial angeordnet. Die Abtriebswelle 12 ist zu einer Anbindung an einen Planetenradsatz P1 vorgesehen.

Die Eingangswelle 11, die Abtriebswelle 12 und der Planetenradsatz P1 sind koaxial zueinander angeordnet.

Die Gruppengetriebevorrichtung 10 umfasst ferner eine Vorgelegewelle 13. Die Vorgelegewelle 13 ist zu der Eingangswelle 11 parallel versetzt angeordnet. Die Vorgelegewelle 13 ist als Vollwelle ausgebildet. Die Gruppengetriebevorrichtung 10 umfasst vier Zahnradebenen Z1 - Z4, eine erste Zahnradebene Z1, eine zweite Zahnradebene Z2, eine dritte Zahnradebene Z3 und eine vierte Zahnradebene Z4.

Die Gruppengetriebevorrichtung 10 umfasst zwei Schalteinheiten S1, S2, eine erste Schalteinheit S1 und eine zweite Schalteinheit S2. Die Gruppengetriebevorrichtung 10 ist über die Kupplung K1, insbesondere eine Lastschaltkupplung, mit der Antriebseinheit 22 verbindbar.

Die Gruppengetriebevorrichtung 10 weist den Planetenradsatz P1 auf. Der Planetenradsatz P1 ist als Einfach-Planetenradsatz ausgebildet. Grundsätzlich wäre jedoch auch denkbar, dass der Planetenradsatz P1 beispielsweise von einem Doppel-Planetenradsatz gebildet ist. Der Planetenradsatz P1 ist in der zweiten Zahnradebene Z2 angeordnet. Der Planetenradsatz P1 bildet die zweite Zahnradebene Z2 aus. Der Planetenradsatz P1 umfasst drei Getriebeelemente P11, P12, P13. Der Planetenradsatz P1 umfasst ein erstes Getriebeelement P11, ein zweites Getriebeelement P12 und ein drittes Getriebeelement P13. Das erste Getriebeelement P11 des Planetenradsatzes P1 ist von einem Hohlrad des Planetenradsatzes P1 gebildet ist. Das zweite Getriebeelement P12 des Planetenradsatzes P1 ist von einem Sonnenrad des Planetenradsatzes P1 gebildet. Das dritte Getriebeelement P13 des Planetenradsatzes P1 ist von einem Planetenradträger des Planetenradsatzes P1 gebildet ist. Ferner umfasst der Planetenradsatz P1 Planetenräder P14, die auf dem als Planetenradträger ausgebildeten dritten Getriebeelement P13 gelagert sind. Das erste Getriebeelement P11 des Planetenradsatzes P1 ist permanent drehfest mit der Abtriebswelle 12 gekoppelt. Das erste Getriebeelement P11 ist permanent drehfest an ein antriebsseitiges Ende der Abtriebswelle 12 angebunden. Das zweite Getriebeelement P12 des Planetenradsatzes P1 ist direkt mit der Vorgelegewelle 13 gekoppelt. Das zweite Getriebeelement P12 des Planetenradsatzes P1 ist über eine Verzahnung direkt mit der Vorgelegewelle 13 gekoppelt. Das dritte Getriebeelement P13 des Planetenradsatzes P1 ist permanent drehfest mit der Eingangswelle 11 gekoppelt. Das dritte Getriebeelement P13 ist permanent drehfest an ein abtriebsseitiges Ende der Eingangswelle 11 angebunden. Der Powersplit-Kraftfluß erfolgt daher über das als Planetenradträger ausgebildete dritte Getriebeelement P13 und wird dort aufgeteilt.

Die erste Zahnradebene Z1 liegt in Bezug auf die restlichen Zahnradebenen Z2, Z3, Z4 der Kupplung K1, insbesondere auch der Antriebseinheit 22, am nächsten. Die erste Zahnradebene Z1 weist ein Losrad 15 und ein Festrad 16 auf. Das Losrad 15 der ersten Zahnradebene Z1 ist koaxial zu der Eingangswelle 11 angeordnet und drehbar auf der Eingangswelle 11 gelagert. Das Losrad 15 bildet ein erstes Losrad 15 der Eingangswelle 11. Das Festrad 16 der ersten Zahnradebene Z1 ist koaxial zu der Vorgelegewelle 13 angeordnet und permanent drehfest mit der Vorgelegewelle 13 verbunden. Das Festrad 16 der ersten Zahnradebene Z1 bildet ein erstes Festrad 16 der Vorgelegewelle 13. Das Losrad 15 und das Festrad 16 bilden eine Zahnradpaarung der ersten Zahnradebene Z1 aus. Das Losrad 15 und das Festrad 16 sind permanent kämmend miteinander verbunden. Die erste Zahnradebene Z1 ist als Einfachradebene ausgebildet.

Die dritte Zahnradebene Z3 ist ausgehend von der Kupplung K1 entlang einer axialen Richtung 17 nach der zweiten Zahnradebene Z2 angeordnet. Die dritte Zahnradebene Z3 weist ein Losrad 19 und ein Festrad 24 auf. Das Losrad 19 der dritten Zahnradebene Z3 ist koaxial zu der Eingangswelle 11 angeordnet und drehbar auf der Abtriebswelle 12 gelagert. Das Losrad 19 der dritten Zahnradebene Z3 bildet ein zweites Losrad 19 der Abtriebswelle 12 aus. Das Festrad 24 der dritten Zahnradebene Z3 ist koaxial zu der Vorgelegewelle 13 angeordnet und permanent drehfest mit der Vorgelegewelle 13 verbunden. Das Festrad 24 der dritten Zahnradebene Z3 bildet ein zweites Festrad 24 der Vorgelegewelle 13. Das Losrad 19 der dritten Zahnradebene Z3 ist zur Bildung des zweiten Getriebegangs G2 vorgesehen. Das Losrad 19 und das Festrad 24 bilden eine Zahnradpaarung der dritten Zahnradebene Z3 aus. Das Losrad 19 und das Festrad 24 sind permanent kämmend miteinander verbunden. Die dritte Zahnradebene Z3 ist als Einfachradebene ausgebildet. Das zweite Festrad 24 der Vorgelegewelle 13 bildet ein zweites Gangrad aus.

Die vierte Zahnradebene Z4 ist ausgehend von der Kupplung K1 entlang einer axialen Richtung 17 nach der dritten Zahnradebene Z3 angeordnet. Die vierte Zahnradebene Z4 weist ein Losrad 18 und ein Festrad 25 auf. Das Losrad 18 der vierten Zahnradebene Z4 ist koaxial zu der Eingangswelle 11 angeordnet und drehbar auf der Abtriebswelle 12 gelagert. Das Losrad 18 der vierten Zahnradebene Z4 bildet ein erstes Losrad 18 der Abtriebswelle 12 aus. Das Festrad 25 der vierten Zahnradebene Z4 ist koaxial zu der Vorgelegewelle 13 angeordnet und permanent drehfest mit der Vorgelegewelle 13 verbunden. Das Festrad 25 der vierten Zahnradebene Z4 bildet ein drittes Festrad 25 der Vorgelegewelle 13. Das Losrad 19 der vierten Zahnradebene Z4 ist zur Bildung des zweiten Getriebegangs G2 vorgesehen. Das Losrad 19 und das Festrad 24 bilden eine Zahnradpaarung der vierten Zahnradebene Z4 aus. Das Losrad 19 und das Festrad 24 sind permanent kämmend miteinander verbunden. Die vierte Zahnradebene Z4 ist als Einfachradebene ausgebildet. Das dritte Festrad 25 der Vorgelegewelle 13 bildet ein erstes Gangrad aus. Die zwei Gangräder sind insbesondere über eine Klauenschaltung mit der Abtriebswelle 12 verkoppelbar.

Das Losrad 18 der vierten Zahnradebene Z4 weist gegenüber dem Losrad 19 der dritten Zahnradebene Z3 einen differierenden Zahnraddurchmesser und/oder eine differierende Zähnezahl auf. Ferner weist das Festrad 25 der vierten Zahnradebene Z4 gegenüber dem Festrad 24 der dritten Zahnradebene Z3 einen differierenden Zahnraddurchmesser und/oder eine differierende Zähnezahl auf.

Ferner weist die Gruppengetriebevorrichtung 10 eine Momentenanpassungsvorrichtung 14 auf. Die Momentenanpassungsvorrichtung 14 ist zu einer Verringerung und/oder zu einer Erhöhung eines, insbesondere über die Vorgelegewelle 13, übertragenen Moments vorgesehen. Die Momentenanpassungsvorrichtung 14 ist in einem Anfahrvorgang und/oder bei einem Schaltvorgang zu einer Veränderung, insbesondere zu einer stufenlosen Veränderung, eines Übersetzungsverhältnisses der Gruppengetriebevorrichtung 10 vorgesehen. Die Momentenanpassungsvorrichtung 14 ist von einer E-Maschine gebildet, wobei die E-Maschine zu einer Bremseinwirkung als Generator betrieben wird. Grundsätzlich wäre jedoch auch eine andere, einem Fachmann als sinnvoll erscheinende Ausbildung der Momentenanpassungsvorrichtung 14 denkbar, wie beispielsweise eine Hydraulikpumpe, ein Retarder oder eine Reibbremse. Die Vorgelegewelle 13 ist mit der Momentenanpassungsvorrichtung 14 gekoppelt. Die Vorgelegewelle 13 ist drehfest mit einem nicht weiter sichtbaren Rotor der Momentenanpassungsvorrichtung 14 gekoppelt oder koppelbar. Mittels der Momentenanpassungsvorrichtung 14 kann die Vorgelegewelle 13 zusätzlich beschleunigt und/oder insbesondere abgebremst werden.

Die Momentenapassungsvorrichtung 14 ist, für eine Gesamtanordnung der Gruppengetriebevorrichtung 10 vorteilhaft, koaxial zu der Vorgelegewelle 13 angeordnet.

Des Weiteren ist das zweite Getriebeelement P12 des Planetenradsatzes P1 permanent drehfest mit dem Losrad 15 gekoppelt, welches mit dem Festrad 16 der Vorgelegewelle 13 permanent in Eingriff steht. Das zweite Getriebeelement P12 des Planetenradsatzes P1 ist permanent drehfest mit dem ersten Losrad 15 der Eingangswelle 11 gekoppelt, welches mit dem ersten Festrad 16 der Vorgelegewelle 13 permanent in Eingriff steht. Das zweite Getriebeelement P12 des Planetenradsatzes P1 ist über eine die Eingangswelle 11 umgreifende Hohlwelle mit dem ersten Losrad 15 der Eingangswelle 11 verbunden. Das als Sonnenrad ausgebildete zweite Getriebeelement P12 ist über eine die Konstante ausbildende Stirnradstufe mit der Vorgelegewelle 13 verbunden.

Ferner weist die Gruppengetriebevorrichtung 10 die erste Schalteinheit S1 auf. Die erste Schalteinheit S1 ist von einer Klauenschalteinheit gebildet. Die erste Schalteinheit S1 ist in axialer Richtung 17 hinter dem Planetenradsatz P1 angeordnet. Die erste Schalteinheit S1 ist in axialer Richtung 17, in Momentenstromrichtung betrachtet, hinter dem Planetenradsatz P1 angeordnet. Die erste Schalteinheit S1 ist auf einer der Antriebseinheit 22 abgewandten Seite des Planetenradsatzes P1 angeordnet. Ferner ist die erste Schalteinheit S1 dazu vorgesehen, die Vorgelegewelle 13 mit der Abtriebswelle 12 zu koppeln. Die erste Schalteinheit S1 ist koaxial zu der Abtriebswelle 12 angeordnet. Die erste Schalteinheit S1 weist des Weiteren drei Schaltstellungen S11, S12, S1N auf. Die erste Schalteinheit S1 weist eine erste Schaltstellung S11, eine zweite Schaltstellung S12 und eine neutrale Schaltstellung S1N auf.

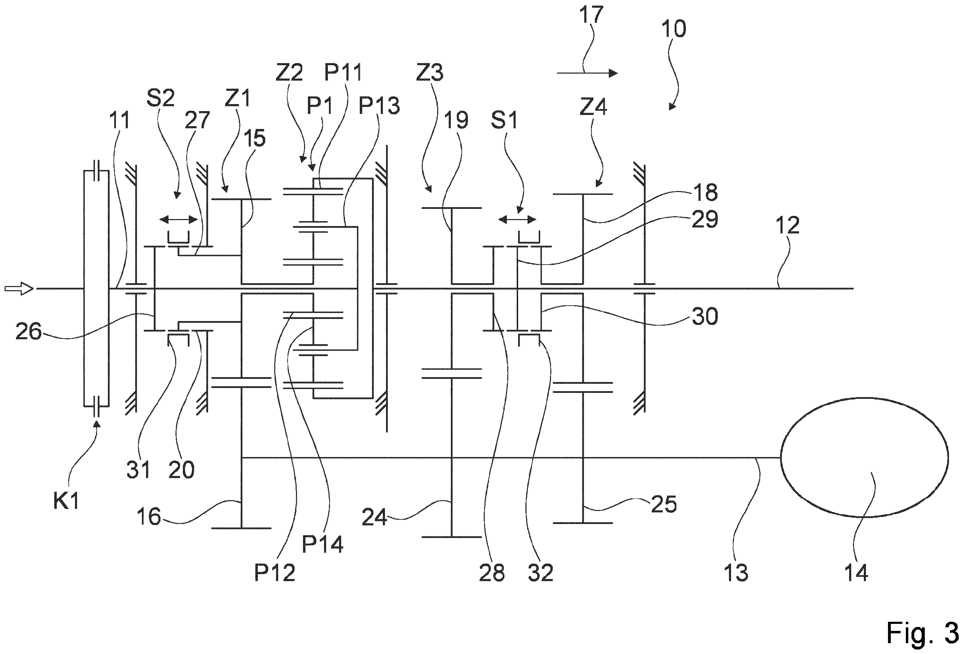

Die erste Schalteinheit S1 ist in der ersten Schaltstellung S11 dazu vorgesehen, das erste Losrad 18 der Abtriebswelle 12 drehfest mit der Abtriebswelle 12 zu koppeln. Die erste Schalteinheit S1 weist dazu ein permanent drehfest mit dem ersten Losrad 18 der Abtriebswelle 12 gekoppeltes erstes Kopplungselement 30 auf. Das erste Kopplungselement 30 und das erste Losrad 18 sind über eine Hohlwelle permanent drehfest miteinander verbunden. Die erste Schalteinheit S1 weist ferner ein zweites Kopplungselement 29 auf. Das zweite Kopplungselement 29 ist permanent drehfest mit der Abtriebswelle 12 verbunden. Ferner weist die erste Schalteinheit S1 ein Schaltelement 32 auf. Das Schaltelement 32 ist von einem Klauenschaltelement gebildet. Das Schaltelement 32 ist über einen nicht weiter sichtbaren Aktuator axial verschiebbar ausgebildet. Zu einer Realisierung der ersten Schaltstellung S11 werden über das Schaltelement 32 das erste Kopplungselement 30 und das zweite Kopplungselement 29 drehfest miteinander gekoppelt. In der ersten Schaltstellung S11 ist die Abtriebswelle 12 über eine erste Stirnradstufe der vierten Zahnradebene Z4 mit der Vorgelegewelle 13 gekoppelt (Fig. 3).

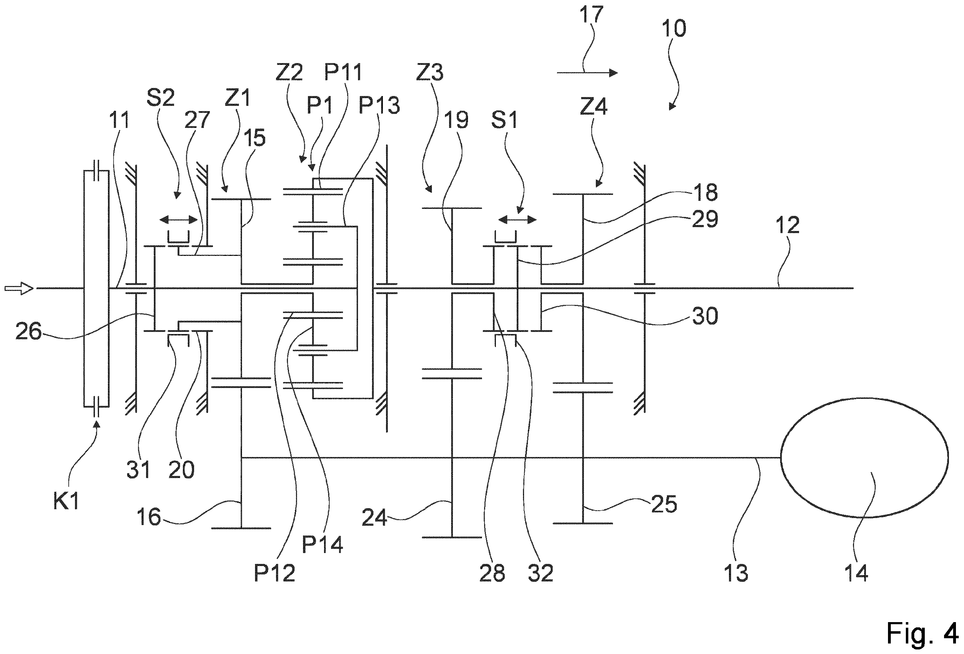

Die erste Schalteinheit S1 ist in der zweiten Schaltstellung S12 dazu vorgesehen, das zweite Losrad 19 der Abtriebswelle 12 drehfest mit der Abtriebswelle 12 zu koppeln. Die erste Schalteinheit S1 weist dazu ein permanent drehfest mit dem zweiten Losrad 19 der Abtriebswelle 12 gekoppeltes zweites Kopplungselement 28 auf. Das zweite Kopplungselement 28 und das zweite Losrad 19 sind über eine Hohlwelle permanent drehfest miteinander verbunden. Zu einer Realisierung der ersten Schaltstellung S11 wird über das Schaltelement 32 das erste Kopplungselement 30 und das zweite Kopplungselement 29 drehfest miteinander gekoppelt. In der zweiten Schaltstellung S12 ist die Abtriebswelle 12 über eine zweite Stirnradstufe der dritten Zahnradebene Z3 mit der Vorgelegewelle 13 gekoppelt. Die zweite Stirnradstufe weist gegenüber der ersten Stirnradstufe ein differierendes Übersetzungsverhältnis auf (Fig. 4).

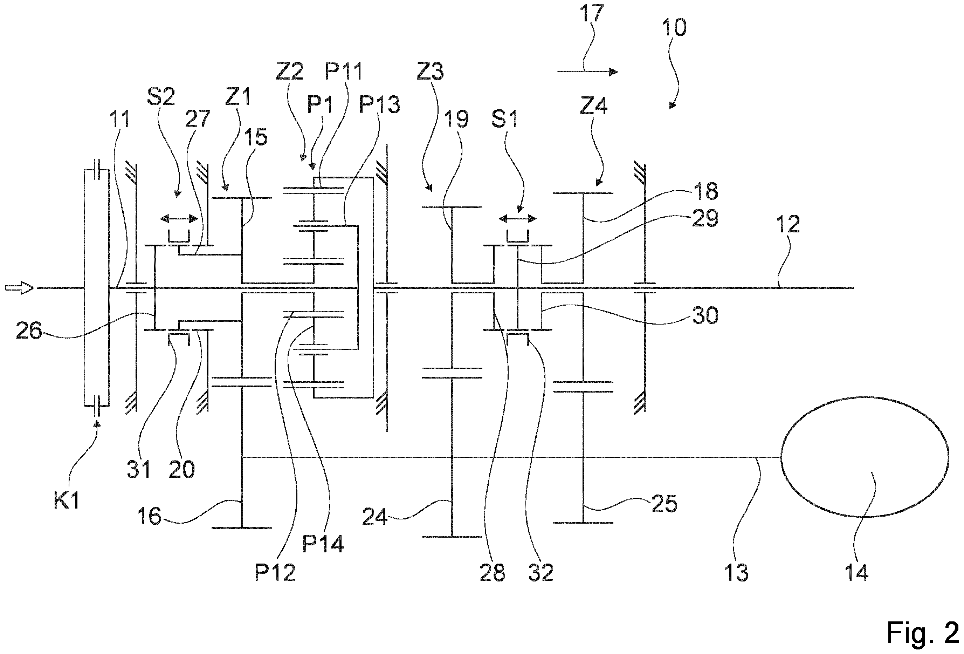

In der neutralen Schaltstellung S1N ist die erste Schalteinheit S1 funktionslos. In der neutralen Schaltstellung S1N findet keine Kopplung der Abtriebswelle 12 mit der Vorgelegewelle 13 statt. In der neutralen Schaltstellung S1N der ersten Schalteinheit S1 ist das Schaltelement 32 lediglich mit dem zweiten Kopplungselement 29 gekoppelt (Fig. 2).

Ferner weist die Gruppengetriebevorrichtung 10 die zweite Schalteinheit S2 auf. Die zweite Schalteinheit S2 ist von einer Klauenschalteinheit gebildet. Die zweite Schalteinheit S2 ist in axialer Richtung 17 vor dem Planetenradsatz P1 angeordnet. Die zweite Schalteinheit S2 ist in axialer Richtung 17, in Momentenstromrichtung betrachtet, vor dem Planetenradsatz P1 angeordnet. Die zweite Schalteinheit S2 ist auf einer der Antriebseinheit 22 zugewandten Seite des Planetenradsatzes P1 angeordnet. Ferner ist die zweite Schalteinheit S2 koaxial zu der Eingangswelle 11 angeordnet. Die zweite Schalteinheit S2 weist des Weiteren zumindest zwei Schaltstellungen S21, S22, S2N auf. Die zweite Schalteinheit S2 weist drei Schaltstellungen S21, S22, S2N auf. Die erste Schalteinheit S1 weist eine erste Schaltstellung S21, eine zweite Schaltstellung S22 und eine neutrale Schaltstellung S2N auf.

Die zweite Schalteinheit S2 ist in der ersten Schaltstellung S21 dazu vorgesehen, den Planetenradsatz P1 zu verblocken. Die zweite Schalteinheit S2 ist in der ersten Schaltstellung S21 dazu vorgesehen, das zweite Getriebeelement P12 des Planetenradsatzes P1 und das dritte Getriebeelement P13 des Planetenradsatzes P1 drehfest zu verbinden. Ferner ist die zweite Schalteinheit S2 in der ersten Schaltstellung S21 dazu vorgesehen, die Eingangswelle 11 direkt mit der Vorgelegewelle 13 zu koppeln. Die zweite Schalteinheit S2 weist dazu ein permanent drehfest mit dem zweiten Getriebeelement P12 des Planetenradsatzes P1 gekoppeltes erstes Kopplungselement 27 auf. Das erste Kopplungselement 27 ist über eine Hohlwelle permanent drehfest mit dem ersten Losrad 15 der Eingangswelle 11 gekoppelt. Die zweite Schalteinheit S2 weist ferner ein zweites Kopplungselement 26 auf. Das zweite Kopplungselement 26 ist permanent drehfest mit der Eingangswelle 11 verbunden. Ferner weist die zweite Schalteinheit S2 ein Schaltelement 31 auf. Das Schaltelement 31 ist von einem Klauenschaltelement gebildet. Das Schaltelement 31 ist über einen nicht weiter sichtbaren Aktuator axial verschiebbar ausgebildet. Zu einer Realisierung der ersten Schaltstellung S21 der zweiten Schalteinheit S2 werden über das Schaltelement 31 das erste Kopplungselement 27 und das zweite Kopplungselement 26 drehfest miteinander gekoppelt. In der ersten Schaltstellung S21 der zweiten Schalteinheit S2 ist die Eingangswelle 11 direkt mit der Vorgelegewelle 13 gekoppelt. Die Eingangswelle 11 ist in der zweiten Schalteinheit S2 drehfest mit dem ersten Losrad 15 der Eingangswelle 11 gekoppelt und über das Losrad 15 mit der Vorgelegewelle 13 gekoppelt.

Ferner weist die Gruppengetriebevorrichtung 10 eine Bremsvorrichtung 20 auf, welche dazu vorgesehen ist, das zweite Getriebeelement P12 des Planetenradsatzes P1 gehäusefest anzubinden. Die Bremsvorrichtung 20 ist von einem gehäusefesten Kopplungselement der zweiten Schalteinheit S2 gebildet. Grundsätzlich sind jedoch auch andere, einem Fachmann als sinnvoll erscheinende Ausbildungen der Bremsvorrichtung 20 denkbar. Die zweite Schalteinheit S2 ist in einer zweiten Schaltstellung S22 zu einer Kopplung mit der Bremsvorrichtung 20 vorgesehen. Die zweite Schalteinheit S2 ist in einer zweiten Schaltstellung S22 dazu vorgesehen, das zweite Getriebeelement P12 drehfest mit der Bremsvorrichtung 20 zu koppeln. Zu einer Realisierung der zweiten Schaltstellung S22 der zweiten Schalteinheit S2 werden über das Schaltelement 31 das erste Kopplungselement 27 und die Bremsvorrichtung 20 drehfest miteinander gekoppelt. Das zweite Getriebeelement P12 des Planetenradsatzes P1 wird dadurch gehäusefest angebunden. Das als Sonnenrad ausgebildete zweite Getriebeelement P12 kann über das als Klaue ausgebildete Schaltelement 31 mit der Eingangswelle 11 oder als Schnellgang mit dem Gehäuse stillgesetzt werden.

In der neutralen Schaltstellung S2N ist die zweite Schalteinheit S2 funktionslos. In der neutralen Schaltstellung S2N der zweiten Schalteinheit S2 ist das Schaltelement 31 lediglich mit dem ersten Kopplungselement 27 gekoppelt.

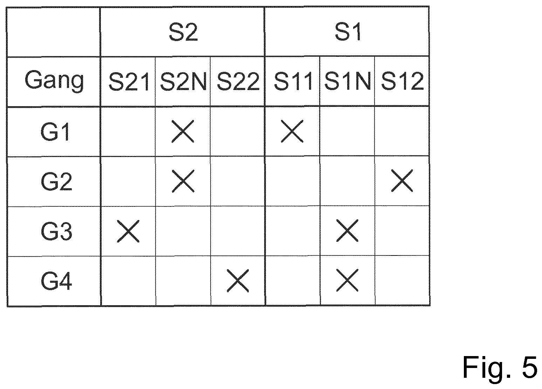

Eine Schaltstrategie zum Schalten der Schalteinheiten S1 und S2 kann der Tabelle in Figur 5 entnommen werden. Es sind vier Getriebegänge G1, G2, G3, G4 schaltbar. Eine Markierung in der entsprechenden Zeile bedeutet jeweils, dass sich die entsprechende Schalteinheit S1 und S2 in der der Spalte entsprechenden Schaltstellung S11, S12, S1N, S21, S22, S2N befindet, um jeweils den in der ersten Spalte angezeigten Getriebegang G1, G2, G3, G4 zu schalten. In dem ersten Getriebegang G1 ist die erste Schalteinheit S1 in der ersten Schaltstellung S11 und die zweite Schalteinheit S2 in der neutralen Schaltstellung S2N (Fig. 3). Ein Antriebsmoment wird in dem ersten Getriebegang G1 von der Eingangswelle 11 über den Planetenradsatz P1 teilweise auf die Vorgelegewelle 13 übertragen und von der Vorgelegewelle 13 über die Stirnradstufe der vierten Zahnradebene Z4 und von dem Planetenradsatz P1 direkt auf die Abtriebswelle 12. Ein Teil der Leistung wir über das dritte Getriebeelement P13 übertragen und ein anderer Teil läuft über die Stirnradstufe der vierten Zahnradebene Z4 zurück auf die Abtriebswelle 12. Dabei ergeben sich in den geschalteten Gängen jeweils die passenden Übersetzungen.

In dem zweiten Getriebegang G2 ist die erste Schalteinheit S1 in der zweiten Schaltstellung S12 und die zweite Schalteinheit S2 in der neutralen Schaltstellung S2N (Fig. 4). Ein Antriebsmoment wird in dem zweiten Getriebegang G2 von der Eingangswelle 11 über den Planetenradsatz P1 teilweise auf die Vorgelegewelle 13 übertragen und von der Vorgelegewelle 13 über die Stirnradstufe der dritten Zahnradebene Z3 und von dem Planetenradsatz P1 direkt auf die Abtriebswelle 12. Ein Teil der Leistung wird über das dritte Getriebeelement P13 des Planetenradsatzes P1 übertragen und ein anderer Teil läuft über die Stirnradstufe der dritten Zahnradebene Z3 zurück auf die Abtriebswelle 12. Dabei ergeben sich in den geschalteten Gängen jeweils die passenden Übersetzungen.

In dem dritten Getriebegang G3 ist die erste Schalteinheit S1 in der neutralen Schaltstellung S1N und die zweite Schalteinheit S2 in der ersten Schaltstellung S21. Ein Antriebsmoment wird in dem dritten Getriebegang G3 von der Eingangswelle 11 über den Planetenradsatz P1 direkt auf die Abtriebswelle 12 übertragen. Der Planetenradsatz P1 ist dabei verblockt, sodass ein Antriebsmoment frei von einem Übersetzungsverhältnis durch den Planetenradsatz P1 geleitet wird.

In dem vierten Getriebegang G4 ist die erste Schalteinheit S1 in der neutralen Schaltstellung S1N und die zweite Schalteinheit S2 in der zweiten Schaltstellung S22. Ein Antriebsmoment wird in dem vierten Getriebegang G4 von der Eingangswelle 11 über den Planetenradsatz P1 direkt auf die Abtriebswelle 12 übertragen. Das zweite Getriebeelement P12 des Planetenradsatzes P1 ist dabei gehäusefest, sodass der Planetenradsatz P1 eine Übersetzung bewirkt. Der vierte Getriebegang G4 bildet einen Overdrive-Getriebegang aus.

Ferner wird ein Verfahren zum Betrieb der Gruppengetriebevorrichtung 10 offenbart. Das Verfahren umfasst einen Anfahrvorgang. Zum Anfahren ist kein Gang eingelegt und beide Schalteinheiten S1, S2 befinden sich in der neutralen Schaltstellung S1N, S2N (Fig. 2). Der Planetenradsatz P1 ist lastfrei, da an dem als Sonnenrad ausgebildeten zweiten Getriebeelement P12 kein Gegenmoment anliegt. Bei stehendem Kraftfahrzeug 21 und laufender Antriebseinheit 22 dreht das als Sonnenrad ausgebildete zweite Getriebeelement P12 mit hoher Drehzahl. Durch Abbremsung des als Sonnenrad ausgebildeten zweiten Getriebeelements P12 mittels der Momentenanpassungsvorrichtung 14 über die Vorgelegewelle 13 baut sich ein Drehmoment auf und das Kraftfahrzeug 21 setzt sich in Bewegung. Ist eine Ganggeschwindigkeit erreicht kann das entsprechende Schaltelement 31, 32 eingelegt werden und der Anfahrvorgang ist abgeschlossen. Ist eine Ganggeschwindigkeit erreicht wird die erste Schalteinheit S1 in eine erste Schaltstellung S11 gebracht.

Des Weiteren umfasst das Verfahren einen Vorgang zur Lastschaltung. In einem ersten Schritt wird dabei das Drehmoment über die Vorgelegewelle 13 durch die Momentenanpassungsvorrichtung 14 reduziert. Das Schaltelement 32 der ersten Schalteinheit S1 wird jetzt lastfrei und kann in die neutrale Schaltstellung S1N geschaltet werden. Anschließend wird die neue Ziel-Gang-Drehzahl angefahren. Ist die Ziel-Gang-Drehzahl erreicht kann das nächste Gangrad bzw. das nächste Losrad 18, 19 mittels dem Schaltelement 32 der ersten Schalteinheit S1 zugekoppelt werden. Das Drehmoment über die Vorgelegewelle 13 wird durch Lösen der Momentenanpassungsvorrichtung 14 wieder freigegeben. Dieser Vorgang kann unter Last bei Hoch- und Rückschaltungen angewendet werden. Dazu ist im Falle der Drehzahlangleichung ein das Bremsmoment an der Vorgelegewelle 13 zu erhöhen bzw. zu reduzieren. Im Schubbetrieb ist eine Lastschaltung nur durch die Ausbildung der Momentenanpassungsvorrichtung 14 möglich. Eine Lastschaltung im Schubbetrieb wäre jedoch beispielsweise auch bei einer Ausbildung der Momentenanpassungsvorrichtung 14 als Hydraulikmotor denkbar.

### Bezugszeichenliste

- 10: Gruppengetriebevorrichtung
- 11: Eingangswelle
- 12: Abtriebswelle
- 13: Vorgelegewelle
- 14: Momentenanpassungsvorrichtung
- 15: Losrad
- 16: Festrad
- 17: Richtung
- 18: Losrad
- 19: Losrad
- 20: Bremsvorrichtung
- 21: Kraftfahrzeug
- 22: Antriebseinheit
- 23: Mehrstufengetriebe
- 24: Festrad
- 25: Festrad
- 26: Kopplungselement
- 27: Kopplungselement
- 28: Kopplungselement
- 29: Kopplungselement
- 30: Kopplungselement
- 31: Schaltelement
- 32: Schaltelement
- G1: Getriebegang
- G2: Getriebegang
- G3: Getriebegang
- G4: Getriebegang
- P1: Planetenradsatz
- P11: Getriebeelement
- P12: Getriebeelement
- P13: Getriebeelement
- P14: Planetenrad
- S1: Schalteinheit
- S11: Schaltstellung
- S12: Schaltstellung
- S1N: Schaltstellung
- S2: Schalteinheit
- S21: Schaltstellung
- S22: Schaltstellung
- S2N: Schaltstellung
- Z1: Zahnradebene
- Z2: Zahnradebene
- Z3: Zahnradebene
- Z4: Zahnradebene

## Patentansprüche

1. Gruppengetriebevorrichtung, insbesondere Splitgetriebe, mit einer Eingangswelle (11), mit einer Abtriebswelle (12), mit einer Vorgelegewelle (13) und mit zumindest einem Planetenradsatz (P1), wobei ein erstes Getriebeelement (P11) des Planetenradsatzes (P1) koaxial zu der Abtriebswelle (12) angeordnet ist und derart mit der Abtriebswelle (12) gekoppelt oder koppelbar ist, dass das erste Getriebeelement (P11) und die Abtriebswelle (12) mit der gleichen Winkelgeschwindigkeit drehen, wobei ein zweites Getriebeelement (P12) des Planetenradsatzes (P1) mit der Vorgelegewelle (13) gekoppelt oder koppelbar ist, wobei ein drittes Getriebeelement (P13) des Planetenradsatzes (P1) koaxial zu der Eingangswelle (11) angeordnet und derart permanent mit der Eingangswelle (11) verbunden ist, dass das dritte Getriebeelement (P13) und die Eingangswelle (11) immer mit der gleichen Winkelgeschwindigkeit drehen, und wobei eine erste Schalteinheit (S1) dazu vorgesehen ist, die Vorgelegewelle (13) mit der Abtriebswelle (12) zu koppeln,
**dadurch gekennzeichnet, dass** die Gruppengetriebevorrichtung eine Momentenanpassungsvorrichtung (14) aufweist und dass
das zweite Getriebeelement (P12) des Planetenradsatzes (P1) mit der Momentenanpassungsvorrichtung (14) gekoppelt oder koppelbar ist, und dass eine zweite Schalteinheit (S2) vorgesehen ist, welche an eines der Getriebeelemente (P11, P12, P13) des Planetenradsatzes (P1) angebunden ist und welche dazu vorgesehen ist, die Eingangswelle (11) mit der Vorgelegewelle (13) zu koppeln.

2. Gruppengetriebevorrichtung nach Anspruch 1,
**dadurch gekennzeichnet, dass**
das zweite Getriebeelement (P12) des Planetenradsatzes (P1) permanent drehfest mit einem koaxial zu der Eingangswelle (11) und drehbar gegenüber der Eingangswelle (11) angeordneten Losrad (15) gekoppelt ist, welches mit einem Festrad (16) der Vorgelegewelle (13) permanent in Eingriff steht.

3. Gruppengetriebevorrichtung nach Anspruch 1,
**dadurch gekennzeichnet, dass**
die zweite Schalteinheit (S2) dazu vorgesehen ist, den Planetenradsatz (P1) zu verblocken.

4. Gruppengetriebevorrichtung nach einem der vorhergehenden Ansprüche,
**dadurch gekennzeichnet, dass**
die erste Schalteinheit (S1) eine neutrale Schaltstellung (S1N) aufweist.

5. Gruppengetriebevorrichtung nach einem der vorhergehenden Ansprüche,
**dadurch gekennzeichnet, dass**
die erste Schalteinheit (S1) in einer ersten Schaltstellung (S11) dazu vorgesehen ist, ein erstes Losrad (18) der Abtriebswelle (12) drehfest mit der Abtriebswelle (12) zu koppeln.

6. Gruppengetriebevorrichtung zumindest nach Anspruch 5,
**dadurch gekennzeichnet, dass**
die erste Schalteinheit (S1) in der zweiten Schaltstellung (S12) dazu vorgesehen ist, ein zweites Losrad (19) der Abtriebswelle (12) drehfest mit der Abtriebswelle (12) zu koppeln.

7. Gruppengetriebevorrichtung nach einem der vorhergehenden Ansprüche,
**gekennzeichnet durch**
eine Bremsvorrichtung (20), welche dazu vorgesehen ist, das zweite Getriebeelement (P12) des Planetenradsatzes (P1) gehäusefest anzubinden.

8. Gruppengetriebevorrichtung zumindest nach Anspruch 7,
**dadurch gekennzeichnet, dass**
die zweite Schalteinheit (S2) zu einer Kopplung mit der Bremsvorrichtung (20) vorgesehen ist.

9. Gruppengetriebevorrichtung nach Anspruch 1,
**dadurch gekennzeichnet, dass**
die zweite Schalteinheit (S2) dazu vorgesehen ist, das zweite Getriebeelement (P12) des Planetenradsatzes (P1) drehfest mit der Eingangswelle (11) zu koppeln.

10. Gruppengetriebevorrichtung nach einem der vorhergehenden Ansprüche,
**dadurch gekennzeichnet, dass**
das erste Getriebeelement (P11) des Planetenradsatzes (P1) von einem Hohlrad des Planetenradsatzes (P1) gebildet ist.

11. Gruppengetriebevorrichtung nach einem der vorhergehenden Ansprüche,
**dadurch gekennzeichnet, dass**
das zweite Getriebeelement (P12) des Planetenradsatzes (P1) von einem Sonnenrad des Planetenradsatzes (P1) gebildet ist.

12. Gruppengetriebevorrichtung nach einem der vorhergehenden Ansprüche,
**dadurch gekennzeichnet, dass**
das dritte Getriebeelement (P13) des Planetenradsatzes (P1) von einem Planetenradträger des Planetenradsatzes (P1) gebildet ist.

## Claims

1. Range-change transmission device, in particular a split transmission, comprising an input shaft (11), comprising a driven shaft (12), comprising a layshaft (13) and
comprising at least one planetary gear set (P1), wherein a first transmission element (P11) of the planetary gear set (P1) is arranged coaxially with the driven shaft (12) and is or can be coupled to the driven shaft (12) such that the first transmission element (P11) and the driven shaft (12) rotate at the same angular speed, wherein a second transmission element (P12) of the planetary gear set (P1) is or can be coupled to the layshaft (13), wherein a third transmission element (P13) of the planetary gear set (P1) is arranged coaxially with the input shaft (11) and is permanently connected to the input shaft (11) such that the third transmission element (P13) and the input shaft (11) always rotate at the same angular speed, and wherein a first shifting unit (S1) is provided for coupling the layshaft (13) to the driven shaft (12),
**characterised in that** the range-change transmission device comprises a torque adjustment device (14) and **in that**
the second transmission element (P12) of the planetary gear set (P1) is or can be coupled to the torque adjustment device (14), and **in that** a second shifting unit (S2) is provided, which is connected to one of the transmission elements (P11, P12, P13) of the planetary gear set (P1) and which is provided for coupling the input shaft (11) to the layshaft (13).

2. Range-change transmission device according to claim 1,
**characterised in that**
the second transmission element (P12) of the planetary gear set (P1) is permanently coupled to a loose gear (15) for conjoint rotation therewith, which loose gear is arranged coaxially with the input shaft (11) and such that it can rotate relative to the input shaft (11) and which loose gear is permanently engaged with a fixed gear (16) of the layshaft (13).

3. Range-change transmission device according to claim 1,
**characterised in that**
the second shifting unit (S2) is provided for locking the planetary gear set (P1).

4. Range-change transmission device according to any of the preceding claims, **characterised in that**
the first shifting unit (S1) comprises a neutral shift position (S1N).

5. Range-change transmission device according to any of the preceding claims, **characterised in that**,
in a first shift position (S11), the first shifting unit (S1) is provided for coupling a first loose gear (18) of the driven shaft (12) to the driven shaft (12) for conjoint rotation therewith.

6. Range-change transmission device according to claim 5, **characterised in that**,
in the second shift position (S12), the first shifting unit (S1) is provided for coupling a second loose gear (19) of the driven shaft (12) to the driven shaft (12) for conjoint rotation therewith.

7. Range-change transmission device according to any of the preceding claims, **characterised by** a braking device (20), which is provided for connecting the second transmission element (P12) of the planetary gear set (P1) securely to the housing.

8. Range-change transmission device according to claim 7, **characterised in that** the second shifting unit (S2) is provided for coupling to the brake device (20).

9. Range-change transmission device according to claim 1, **characterised in that** the second shifting unit (S2) is provided for coupling the second transmission element (P12) of the planetary gear set (P1) to the input shaft (11) for conjoint rotation therewith.

10. Range-change transmission device according to any of the preceding claims, **characterised in that**
the first transmission element (P11) of the planetary gear set (P1) is formed of a ring gear of the planetary gear set (P1).

11. Range-change transmission device according to any of the preceding claims, **characterised in that**
the second transmission element (P12) of the planetary gear set (P1) is formed of a sun gear of the planetary gear set (P1).

12. Range-change transmission device according to any of the preceding claims, **characterised in that**
the third transmission element (P13) of the planetary gear set (P1) is formed of a planet carrier of the planetary gear set (P1).

## Revendications

1. Dispositif de train d'engrenages, notamment engrenage en deux pièces, avec un arbre d'entrée (11), avec un arbre de sortie (12), avec un arbre intermédiaire (13) et avec au moins un ensemble de roues planétaires (P1), dans lequel un premier élément d'engrenage (P11) de l'ensemble de roues planétaires (P1) est disposé de manière coaxiale à l'arbre de sortie (12) et est accouplé ou peut être accouplé à l'arbre de sortie (12) de telle sorte que le premier élément d'engrenage (P11) et l'arbre de sortie (12) tournent avec la même vitesse angulaire, dans lequel un deuxième élément d'engrenage (P12) de l'ensemble de roues planétaires (P1) est accouplé ou peut être accouplé à l'arbre intermédiaire (13), dans lequel un troisième élément d'engrenage (P13) de l'ensemble de roues planétaires (P1) est disposé de manière coaxiale à l'arbre d'entrée (11) et connecté de manière permanente à l'arbre d'entrée (11) de telle sorte que le troisième élément d'engrenage (P13) et l'arbre d'entrée (11) tournent toujours avec la même vitesse angulaire, et dans lequel un premier module de commutation (S1) est prévu pour accoupler l'arbre intermédiaire (13) à l'arbre de sortie (12),
**caractérisé en ce que** le dispositif de train d'engrenages présente un dispositif d'adaptation de moment (14) et que le deuxième élément d'engrenage (P12) de l'ensemble de roues planétaires (P1) est accouplé ou peut être accouplé au dispositif d'adaptation de moment (14), et qu'un second module de commutation (S2) est prévu, lequel est attaché à un des éléments d'engrenage (P11, P12, P13) de l'ensemble de roues planétaires (P1) et lequel est prévu pour accoupler l'arbre d'entrée (11) à l'arbre intermédiaire (13).

2. Dispositif de train d'engrenages selon la revendication 1,
**caractérisé en ce que**
le deuxième élément d'engrenage (P12) de l'ensemble de roues planétaires (P1) est accouplé de manière permanente fixe en rotation à une roue libre (15) disposée de manière coaxiale à l'arbre d'entrée (11) et rotative par rapport à l'arbre d'entrée (11) qui est en engagement permanent avec une roue fixe (16) de l'arbre intermédiaire (13).

3. Dispositif de train d'engrenages selon la revendication 1,
**caractérisé en ce que**
le second module de commutation (S2) est prévu pour bloquer l'ensemble de roues planétaires (P1).

4. Dispositif de train d'engrenages selon une des revendications précédentes,
**caractérisé en ce que**
le premier module de commutation (S1) présente une position de commutation neutre (S1N).

5. Dispositif de train d'engrenages selon une des revendications précédentes,
**caractérisé en ce que**
le premier module de commutation (S1) est prévu dans une première position de commutation (S11) pour accoupler une première roue libre (18) de l'arbre de sortie (12) de manière fixe en rotation à l'arbre de sortie (12).

6. Dispositif de train d'engrenages au moins selon la revendication 5,
**caractérisé en ce que**
le premier module de commutation (S1) est prévu dans la seconde position de commutation (S12) pour accoupler une seconde roue libre (19) de l'arbre de sortie (12) de manière fixe en rotation à l'arbre de sortie (12).

7. Dispositif de train d'engrenages selon une des revendications précédentes,
**caractérisé par**
un dispositif de frein (20) qui est prévu pour attacher de manière fixe au logement le deuxième élément d'engrenage (P12) de l'ensemble de roues planétaires (P1).

8. Dispositif de train d'engrenages au moins selon la revendication 7,
**caractérisé en ce que**
le second module de commutation (S2) est prévu pour un accouplement au dispositif de frein (20).

9. Dispositif de train d'engrenages selon la revendication 1,
**caractérisé en ce que**
le second module de commutation (S2) est prévu pour accoupler le deuxième élément d'engrenage (P12) de l'ensemble de roues planétaires (P1) de manière fixe en rotation à l'arbre d'entrée (11).

10. Dispositif de train d'engrenages selon une des revendications précédentes,
**caractérisé en ce que**
le premier élément d'engrenage (P11) de l'ensemble de roues planétaires (P1) est formé d'une roue creuse de l'ensemble de roues planétaires (P1).

11. Dispositif de train d'engrenages selon une des revendications précédentes,
**caractérisé en ce que**
le deuxième élément d'engrenage (P12) de l'ensemble de roues planétaires (P1) est formé d'une roue solaire de l'ensemble de roues planétaires (P1).

12. Dispositif de train d'engrenages selon une des revendications précédentes,
**caractérisé en ce que**
le troisième élément d'engrenage (P13) de l'ensemble de roues planétaires (P1) est formé d'une cage de transmission planétaire de l'ensemble de roues planétaires (P1).
